Europäisches Patentamt

European Patent Office

Office européen des brevets

(11) Publication number: 0 400 882 A1

# EUROPEAN PATENT APPLICATION

(21) Application number: 90305589.5

(22) Date of filing: 23.05.90

(51) Int. Cl.5: A01G 7/06

(30) Priority: 27.05.89 GB 8912291

(43) Date of publication of application:
05.12.90 Bulletin 90/49

(84) Designated Contracting States:
AT BE CH DE DK ES FR GB GR IT LI LU NL SE

(71) Applicant: CMB FOODCAN PLC
Woodside Perrywood Walk
Worcester WR5 1EQ(GB)

(72) Inventor: Hammond, John Michael
73 Grove Street
Wantage, Oxfordshire OX12 7AG(GB)

(74) Representative: Lerwill, John et al
A.A. Thornton & Co. Northumberland House
303-306 High Holborn
London, WC1V 7LE(GB)

(54) Injection device for a tree.

(57) A device for administering a liquid insecticide to a tree is formed as an elongate and cylindrical plastics capsule (10). The capsule is filled with the insecticide through its back end, which is afterwards closed and sealed by a plug closure (40). The front or leading end (28) of the capsule (10) is formed as a conical nose (18) which is integrally attached at a region of weakness (A) to the remainder of the capsule body. For use the capsule (10) is fired into a tree by a piston tool, and during penetration the nose (11) separates from the body (14) and is driven in a backward direction along it, leaving a gap through which the insecticide may escape into the wood for natural distribution throughout the tree.

EP 0 400 882 A1

# INJECTION DEVICE FOR A TREE

This invention relates to a device for introducing a liquid treatment agent, for example a liquid insecticide, germicide or herbicide, into the trunk of a tree. For brevity such a device is referred to throughout the specification as an "Injection Device", although it is to be understood that the word "injection" does not have its usual meaning.

A particular application of the invention is the injection of a liquid insecticide into the trunk of an oil palm tree, although other applications are possible. The invention provides a novel injection device by which the insecticide may be administered, and a method of using the device.

The prior art includes many proposals to introduce a treatment liquid into a tree by means of a capsule containing the liquid, and by mechanical and/or chemical means to release the liquid by rupturing or otherwise destroying the integrity of the capsule. However, so far as the present Applicants are aware, none of these proposals has been used commercially. Applicants suspect that this failure to commercialise has been for various different reasons, amongst which are technical inadequacy in relation to the insertion of the device into the tree and/or the release of the treatment liquid when and where required, the difficulty of employing the device in the field, or cost. Applicants seek by this invention to provide a device which may combine relative cheapness of manufacture with ease and adaptability of administration and reliability of operation.

Accordingly, from one aspect, the invention provides an injection device for a tree, which comprises a unitary, elongate and hollow plastics body having a tubular wall portion and a closure which integrally closes one end of the tubular wall portion and provides a region of weakness for the device, the wall portion and the integral closure together defining a chamber which is closable by a closure member at the end of the body opposite said integral closure to enclose a treatment liquid for the tree, the device, after having been charged with the treatment liquid and closed by the closure member, being drivable into a tree with the said one end foremost and during penetration rupturing at the region of weakness to release the treatment liquid into the tree.

Applicants prefer that the integral closure should have the form of a nose which projects forwardly beyond the tubular wall portion and which is attached to the wall portion at the said region of weakness. Accordingly, from a second aspect, there is provided an injection device for a tree, which comprises a unitary, elongate and hollow plastics body having a tubular wall portion and an integral closure comprising a nose which integrally closes one end of the wall portion, is peripherally joined thereto at a region of weakness, and projects beyond the wall portion, the body defining a chamber which is closable by a closure member at the end of the body opposite the nose to enclose a treatment liquid for the tree, the device, after having been charged with the treatment liquid and closed by the closure member, being drivable nose-first into a tree and during penetration rupturing around the region of weakness to release the treatment liquid into the tree.

The invention also provides a method of treating a tree with a treatment liquid which comprises enclosing the liquid in a chamber of an injection device comprising a unitary and elongate hollow plastics body having a tubular wall portion and a closure which integrally closes one end of the wall portion and is joined peripherally thereto at a region of weakness, and driving the device into the said tree with the said one end foremost, during the penetration of the device into the tree the device rupturing around the region of weakness to release the treatment liquid into the tree.

These and other aspects and features of the of the invention will become apparent from the following description of an injection device in accordance with the invention, and its manner of use to treat an oil palm tree.

In the accompanying drawings:-

Fig.1 shows the injection device in central longitudinal section;

Fig.2 is an enlarged view of the part of the device which is shown ringed at A in Fig.1; and

Fig.3 is a plan view of the device as seen on the arrow B of Fig.1 and to the same scale.

The drawings show a capsule 10 designed for introducing a metered dose of a liquid insecticide into the trunk of an oil palm tree. The capsule 10 is formed of two parts which together define a chamber 12 in which the insecticide is held. A first part 14 forming the body of the capsule is made from a suitable thermoplastics polymer such as talc-filled polypropylene by a conventional injection-moulding process. It has a hollow cylindrical wall portion 16 having a substantially uniform thickness, and a conical nose 18 centred on the axis of the wall portion at the end of the body which is destined to form the front end of the capsule.

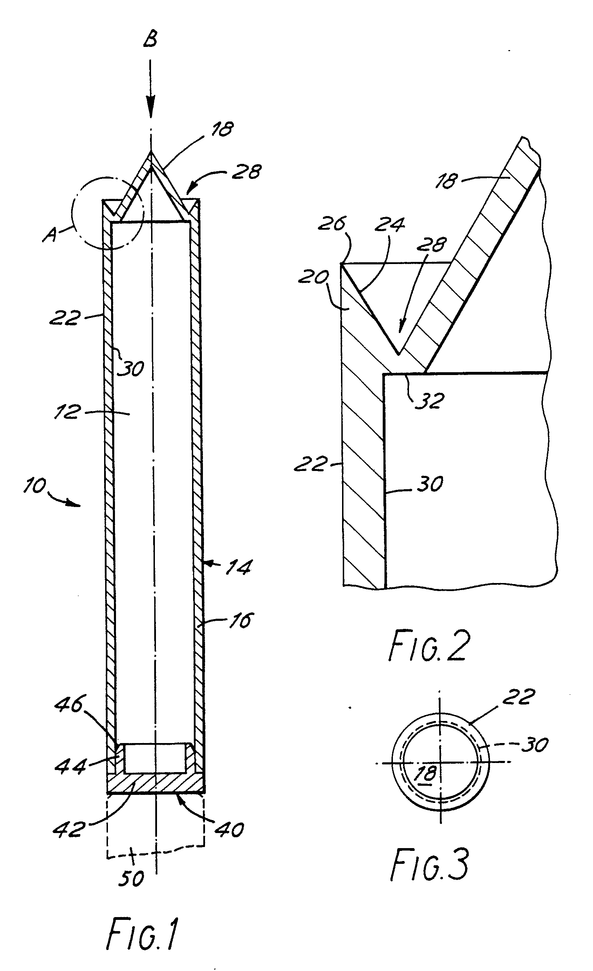

As is apparent from the magnified view shown in Fig.2, the nose 18 is formed integrally as an end closure for the body, being integrally joined around its outer periphery to the inner periphery of a tapering annular rim 20 which forms the leading end of the wall portion. The outer surface of the rim forms a continuation of the outer surface 22 of the wall portion; the inner surface 24 of the rim, however, is frustoconical and extends backwardly and inwardly of the capsule from the circular leading edge 26 of the rim to the apex of a notch 28 where the wall wall portion and nose are joined. It is particularly to be noted that the notch apex is located on a slightly smaller diameter than the diameter of the bore 30 of the wall portion; furthermore, it is associated with a radial shoulder 32 which forms part of the interior surface of the capsule and joins the bore with the inside surface of the nose. The nose projects forwardly beyond the rim 20 so as to provide a centrally disposed leading point for the capsule.

The thickness of plastics material separating the apex of the notch 28 from the shoulder 32 is small, and so chosen that an accurately defined and annular region of weakness with known rupturing characteristics is formed at the notch apex for the purpose shortly to become apparent.

Reverting now to Fig.1, the end of the body 14 opposite to the nose, that is to say, its back end, is closed by a plug closure which forms the second part 40 of the capsule. The plug closure is preferably injection-moulded from a suitable thermoplastics polymer, possibly the same polymer as the body 14. It has a head 42 and a reduced-diameter, hollow shank 44. The head 42 has the same external diameter as the wall portion 16 and forms a continuation of the outer surface 22 of the wall portion. The shank 44 is moulded to be a push fit into the bore 30 of the wall portion, and to assist insertion may have a chamfer 46 formed at its front end.

The capsule is charged with the liquid insecticide when the body 14 is upright and inverted, and thereafter the plug closure 40 is pushed fully into the body, that is to say, until its head 42 engages the free end of the body to prevent further movement. Grooves and/or relief structures such as pips, ribs or shoulders (not shown) formed in one or both of the cooperating surfaces of the closure and the body prevent air entrapment and pressure build-up during fitting, by allowing escape of air past the closure/body interface.

After the plug closure has been fitted, spin-welding or ultrasonic welding techniques are used to bond the plug closure 40 firmly in position and form a liquid-tight seal against escape of the insecticide between the plug closure and the body 14. The capsule is then ready for packing, transit and use.

For use the capsule is inserted into a piston tool of the kind which is marketed by Hilti AG under the type designation DX 450. The barrel of the tool is then held against the trunk of the tree to be treated, and the tool is fired. The piston of the tool then impels the capsule forward with sufficient energy to cause it to penetrate the tree. In Fig.1 the front end of the tool piston is shown in broken line and indicated by the reference numeral 50.

The design of the capsule is such, in relation to the known characteristics of the piston tool and the predicted characteristics of the wood, that the depth of penetration of the capsule into the tree is approximately equal to, and preferably slightly greater than the length of the capsule. The capsule therefore becomes wholly or very substantially buried in the tree. During the penetration, the resistance to the capsule movement which is presented by the tree generally increases, and as the capsule moves forward it ruptures at the region of weakness formed at the apex of the notch 28, so that the nose 18 separates from the remainder of the body 14 and becomes free to move backwardly in relation to the wall portion 16 within the bore 30.

Because the broken free edge of the nose has a generally smaller radial dimension than the bore of the wall portion, a gap will be left between the nose and the wall portion through which the liquid insecticide can leak into the tree. The insecticide is therefore subsequently released generally in a forward direction and at a location deep within the trunk from where it can be most effectively distributed throughout the tree by the natural liquid movement mechanisms involved. The capsule itself acts as a stopper preventing escape of the insecticide from the hole which it has formed; moreover, when the capsule is first ruptured, some of the insecticide may be expelled forwardly at high pressure by hydraulic action, so as to enter any interstices of the tree in the locality of the nose. The insecticide is therefore efficiently administered from a position within the tree at which it can be most effective to perform its intended function.

Whilst in the described embodiment it is preferred to impel the capsule 10 into the oil palm tree and release the liquid insecticide by means of a piston tool as described, other methods may be used for achieving these objectives. For example, the capsule may be driven into a preformed hole by means of a punch and hammer; alternatively a punch and hammer may be used in conjunction with a tubular guide into which the capsule is inserted for presentation to the tree. In the latter alternative, as with piston tool administration, the capsule is required to form a hole for itself as it penetrates the tree. In the former one of these alternatives the hole is preformed and made of the same or slightly smaller diameter as the capsule so as to prevent any substantial leakage of the treatment liquid along the outside of the capsule.

Whilst Applicants prefer the integral front end closure of the capsule to be in the form of a nose as particularly described, it is believed that for some applications of the invention the closure may advantageously have some other form. Thus in a modification of the capsule 10 the nose is replaced by a flat panel which is joined to the wall portion 16 by the notch 28, which again provides a region of weakening around which the closure may separate.

Experiments conducted by Applicants suggest that the rim 22 of the described embodiment helps to ensure proper rupturing (as described above) by concentrating stresses at the apex of the notch 28. However, it is believed that for some applications of the invention the rim may be omitted or may be substantially modified from the form shown.

The invention is not limited to the administration of insecticides to oil palm trees as particularly described. It has application to the dispensing of other liquid treatments (e.g. fungicides), and for other woods whether of palms (e.g. oil palm and coconut palms), hardwoods (e.g. fruit trees) or softwoods.

## Claims

1. An injection device for a tree, which comprises a unitary, elongate and hollow plastics body having a tubular wall portion and a closure which integrally closes one end of the tubular wall portion and provides a region of weakness for the device, the wall portion and the integral closure together defining a chamber which is closable by a closure member at the end of the body opposite said integral closure to enclose a treatment liquid for the tree, the device, after having been charged with the treatment liquid and closed by the closure member, being drivable into a tree with the said one end foremost and during penetration rupturing at the region of weakness to release the treatment liquid into the tree.

2. An injection device as claimed in claim 1, wherein the region of weakness is annular and defines within it a separable part of the integral closure, the separable part of the integral closure being arranged, on rupturing around the region of weakness, to move backwardly along the interior of the device within the wall portion thereof.

3. An injection device for a tree, which comprises a unitary, elongate and hollow plastics body having a tubular wall portion and an integral closure comprising a nose which integrally closes one end of the wall portion, is peripherally joined thereto at a region of weakness, and projects beyond the wall portion, the body defining a chamber which is closable by a closure member at the end of the body opposite the nose to enclose a treatment liquid for the tree, the device, after having been charged with the treatment liquid and closed by the closure member, being drivable nose-first into a tree and during penetration rupturing around the region of weakness to release the treatment liquid into the tree.

4. An injection device as claimed in claim 3, wherein the region of weakness is located radially within the chamber periphery defined by the wall portion, the nose, after rupturing, moving backwardly along the chamber and forming with the wall portion a gap through which the treatment liquid can escape into the tree.

5. An injection device as claimed in claim 3 or claim 4, wherein the wall portion and the nose have opposed and backwardly convergent surfaces together defining an annular notch at the apex of which the region of weakness is located.

6. An injection device as claimed in any preceding claim, wherein the closure member comprises a head portion which is located against the end of the body wall portion opposite the integral closure, and a plug portion which is formed integrally with the head portion and extends within the wall portion in engagement with the same.

7. An injection device as claimed in any preceding claim, wherein the closure is attached to the body by ultrasonic welding or spin-welding.

8. An injection device as claimed in any preceding claim, wherein at least the body is made of talc-filled polypropylene.

9. A method of treating a tree with a treatment liquid, which comprises enclosing the liquid in a chamber of an injection device comprising a unitary and elongate hollow plastics body having a tubular wall portion and a closure which integrally closes one end of the wall portion and is joined peripherally thereto at a region of weakness, and driving the device into the said tree with the said one end foremost, during the penetration of the device into the tree the device rupturing around the region of weakness to release the treatment liquid into the tree.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-1925454 (STERZIG & KLAUS)<br>* pages 1 - 2; figures 1, 2 *<br>--- | 1, 3, 9. | A01G7/06 |
| A | US-A-1999458 (W.F.HOLLISTER)<br>* pages 1 - 2; figures 1-7 *<br>--- | 1, 3, 9. | |
| A | US-A-3137968 (R.L.LAING)<br>--- | | |
| A | US-A-4308689 (JENSON & AL.)<br>--- | | |
| A | GB-A-786083 (FISON PEST CONTROL LTD)<br>----- | | |

TECHNICAL FIELDS SEARCHED (Int. Cl.5 )

A01G
A01M

The present search report has been drawn up for all claims

| Place of search | Date of completion of the search | Examiner |
|---|---|---|
| THE HAGUE | 03 SEPTEMBER 1990 | WOHLRAPP R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)